# FASCICULE DE BREVET EUROPEEN

(11) **EP 1 701 595 B1**
(45) Date de publication et mention de la délivrance du brevet: **07.11.2007**
(21) Numéro de dépôt: 06290083.2
(22) Date de dépôt: 13.01.2006
(51) Int. Cl.: H05B 41/282, H02M 1/12, H04B 15/02

(54) **Ballast de Lampe à décharge notamment pour projecteur de véhicule**
Vorschaltgerät für eine Entladungslampe, insbesondere für Kraftfahrzeugscheinwerfer
Discharge lamp ballast especially for a car headlight

(30) Priorité: 17.01.2005 FR 0500486
(43) Date de publication de la demande: 13.09.2006
(73) Titulaire: VALEO VISION, 93012 Bobigny Cédex (FR)
(72) Inventeur: Clavier, Philippe, 93000 Bobigny (FR)

(56) Documents cités:
- EP-A- 1 484 201
- US-A- 5 552 976
- US-B1- 6 337 800
- US-B1- 6 556 463

## Description

La présente invention concerne un ballast de lampe à décharge tel qu'utilisé par exemple dans un dispositif d'éclairage / signalisation de véhicule.

L'invention trouve une application privilégiée, mais non exclusive, dans l'alimentation des lampes à décharge équipant les projecteurs d'éclairage de nouvelle génération pour véhicule.

Dans le but d'améliorer à la fois la puissance lumineuse et le rendement énergétique des projecteurs d'éclairage de véhicule, l'évolution technique actuelle conduit à remplacer les lampes à filament par des lampes à décharge. A la différence des ampoules classiques, qui étaient conçues pour être connectées directement à la batterie du véhicule, ces nouvelles lampes nécessitent des tensions élevées, alternatives ou continues, selon le mode de fonctionnement, pour créer et entretenir la décharge électrique dans le gaz.

Ces tensions élevées, spécifiques à chaque type de lampes (de l'ordre de 25 kV pour l'allumage d'une lampe au xénon), sont produites à partir de la tension de bord par un module d'alimentation, qui assure également la régulation de puissance, connu sous le nom de "ballast".

Un exemple de ballast adapté aux applications automobiles est décrit dans le brevet américain US5036256.

Conformément à US5036256, lors du démarrage de la lampe à décharge, le ballast produit à partir de la tension de 12 V de la batterie une haute tension continue de 500 à 700 V et une impulsion de 25-30 kV, puis une tension de maintien de l'ordre de 90 V. Pour ce faire, il est fait appel à une alimentation à découpage fonctionnant à 50 kHz.

De manière générale, si les lampes à décharge présentent des avantages certains sur les lampes à filament, leur fonctionnement pourrait être la source de perturbations radioélectriques importantes dans le cas où elles seraient mal utilisées.

Les problèmes posés par la compatibilité électromagnétique (CEM) de ce type d'équipement sont connus de l'état de la technique. On sait que les diverses servitudes de bord, reposant de plus en plus sur des systèmes électroniques complexes, peuvent être perturbées, mais aussi que l'autoradio peut être parasité, de manière évidemment beaucoup plus perceptible par le conducteur et les passagers du véhicule.

Une solution partielle à ces problèmes est décrite dans la demande de brevet français FR2703555.

Conformément à FR2703555, la mesure prévue pour limiter la diffusion du rayonnement électromagnétique consiste à réaliser des projecteurs de construction compacte en agençant dans le boîtier la lampe et au moins une partie du ballast. Un circuit de filtrage comportant des selfs en série avec la lampe et des condensateurs en parallèle est intégré dans le connecteur. Toutefois, la mesure de réduction des perturbations radioélectriques enseignée par FR2703555 concerne uniquement les parasites créés par l'arc de la lampe à décharge elle-même, et passe complètement sous silence le bruit généré par l'alimentation à découpage que comporte généralement les ballasts actuels.

Les avancées technologiques et la recherche de meilleurs rendements conduisent vers une augmentation de la fréquence de fonctionnement des ballasts.

Des fréquences de découpage supérieures à 100 kHz, de 200 kHz, voire 300 kHz sont actuellement utilisées, ce qui correspond à la gamme des "grandes ondes" de la radiodiffusion. Dans ces circonstances, la réduction des perturbations radioélectriques émises devient une contrainte lourde pour le fabricant de ballasts et l'équipementier automobile.

La norme européenne CISPR-25, issue des travaux du Comité International Spécial des Perturbations Radioélectriques, portant sur les *"Limites et méthodes de mesure des caractéristiques des perturbations radioélectriques pour la protection des récepteurs utilisés à bord des véhicules"* a défini un certain nombre de contraintes pour les fréquences supérieures à 150 kHz. Ainsi, cette norme préconise un niveau maximal de perturbation en mode conduit de 60 dBµV dans la bande de fréquences de 150 kHz à 300 kHz sur le faisceau électrique du véhicule pour les équipements de classe 4.

La question générale de l'optimisation de la CEM des alimentations à découpage a été étudiée en détail par les électroniciens. Par exemple, dans une note d'application publiée en 2003 par la société Texas Instruments et intitulée en anglais *"Understanding and Optimizing Electromagnetic Compatibility in Switchmode Power Supplies",* les auteurs, B. Mammano et B. Carsten, font la revue des diverses méthodes connues de réduction des perturbations radioélectriques émises, que ce soit en mode rayonné ou en mode conduit, et dans ce dernier cas, aussi bien en mode commun qu'en mode différentiel.

Le procédé de base de réduction du bruit de mode différentiel consiste à insérer entre l'alimentation à découpage et le réseau électrique un filtre comportant une self de quelques dizaines de µH en série et un condensateur de plusieurs milliers de µF en parallèle. Mais la capacité parasite d'une telle self et l'inductance parasite d'un condensateur d'une telle valeur, obligatoirement de type "électrochimique", rendent inopérant un filtre aussi simple.

Afin de diminuer les effets de l'inductance équivalente du condensateur, on associe plusieurs condensateurs de plus faible valeur en parallèle, et pour limiter la capacité parasite de la self, il est recommandé d'utiliser un bobinage spécial à une seule couche.

Selon l'enseignement de cette note d'application, des circuits LC peuvent aussi être utilisés dans des étages additionnels, en les amortissant au besoin par des circuits RC pour éviter les résonances pouvant conduire à des surtensions ou des auto-oscillations.

Cependant, ces dernières méthodes ont pour inconvénient de rendre plus complexe le schéma du filtre de base. Il en découle une augmentation du nombre de composants à implanter, ce qui est rédhibitoire pour un circuit de ballast, qui, comme on l'a vu, doit être le plus compact possible, sans bien sûr mentionner le problème du surcoût.

La présente invention a pour objectif de fournir un ballast perfectionné conçu pour fournir des performances CEM supérieures tout en satisfaisant à des contraintes élevées d'efficacité, de simplicité et d'encombrement minimal.

Le ballast selon l'invention, notamment pour dispositif d'éclairage / signalisation de véhicule, comprend :
- des bornes d'entrée recevant une tension continue provenant d'une source d'alimentation du véhicule,
- un circuit d'alimentation à découpage, fonctionnant à une fréquence de découpage prédéterminée, pour fournir en sortie une tension alimentant la lampe à décharge, et
- des moyens de filtrage disposés en entrée du ballast, les moyens de filtrage étant destinés à réduire des perturbations radioélectriques produites par le circuit alimentation à découpage et comportant au moins un premier condensateur de filtrage connecté entre les bornes d'entrée et une self de filtrage connectée en série entre l'une des bornes d'entrée et le circuit d'alimentation à découpage.

Conformément à l'invention, les moyens de filtrage comprennent également au moins un second condensateur de filtrage en série avec une self additionnelle, le second condensateur formant avec la self additionnelle un circuit résonant situé entre les bornes d'entrée et accordé sur la fréquence de découpage.

Il convient de souligner ici que la création d'une résonance dans un filtre destiné à réduire le bruit généré par une alimentation à découpage va à l'encontre des pratiques et des connaissances générales de l'homme de métier, puisqu'il est au contraire conseillé d'amortir les circuits LC présents dans le filtre. Concernant cette pratique de l'homme du métier, le lecteur se référera avec profit à la note d'application de Texas Instruments citée ci-dessus et concernant la CEM des alimentations à découpage. Selon cette note, une manière d'éviter tout dysfonctionnement du filtre est d'ajouter, non pas une self, mais une résistance en série avec les condensateurs de filtrage.

Selon une caractéristique additionnelle de ce ballast, le second condensateur est constitué d'une pluralité de condensateurs de découplage en parallèle. De préférence, le second condensateur de filtrage ou les condensateurs de découplage du circuit résonnant sont de type céramique.

Selon une première forme de réalisation, la self du circuit résonnant du ballast selon l'invention est de type composant monté en surface.

Selon une autre forme de réalisation, la self additionnelle est de type self imprimée et elle est formée directement à la surface du circuit imprimé supportant les composants électroniques du ballast. De préférence, le second condensateur de filtrage ou les condensateurs de découplage du circuit résonnant sont du type composant monté en surface, et la self imprimée est formée sur la face du circuit imprimé opposée à celle sur laquelle sont implantés lesdits condensateurs.

La forme de réalisation ci-dessus, avec une self imprimée, est particulièrement avantageuse au niveau du coût. De plus, les essais effectués par l'entité inventive montre que la self imprimée obtenue est particulièrement stable, et le prototype, une fois réglé empiriquement en laboratoire, est parfaitement reproductible en grande série.

Selon une forme de réalisation préférée du ballast selon l'invention, la fréquence de découpage est comprise entre 150 kHz et 300 kHz, la capacité du second condensateur ou de chacun des condensateurs de découplage est de l'ordre de quelques µF, et l'inductance de la self additionnelle est de l'ordre de quelques dizaines de nH.

L'invention concerne aussi une utilisation du ballast tel que décrit brièvement ci-dessus dans un véhicule soumis à une contrainte réglementaire imposant un niveau de perturbations radioélectriques inférieur à 60 dBµV dans une bande de fréquences comprise entre 150 kHz et des fréquences supérieures.

L'invention concerne aussi une utilisation du ballast tel que décrit brièvement ci-dessus dans un véhicule pour alimenter une lampe au xénon.

D'autres aspects et avantages de la présente l'invention apparaîtront plus clairement à la lecture de la description de formes de réalisation particulières qui va suivre, cette description étant donnée à titre d'exemple non limitatif et faite en référence aux dessins annexés, dans lesquels :
La **Figure 1** est un schéma synoptique général du type de ballast de lampe à décharge pour véhicule concerné par l'invention, et de son utilisation.
La **Figure 2** est le schéma électrique du filtre, et du convertisseur CC-CC lui faisant suite, d'un ballast de l'art antérieur du type concerné par l'invention.
La **Figure 3** est le schéma électrique du filtre, et du convertisseur CC-CC lui faisant suite, du ballast selon l'invention.
Les **Figures 4a et 4b** sont les vues schématiques d'une forme de réalisation particulière du ballast selon l'invention, montrant l'implantation d'une self imprimée.
La **Figure 5** est la courbe représentant le niveau de perturbations radioélectriques d'un faisceau électrique de véhicule obtenu avec une forme de réalisation particulière du ballast perfectionné selon l'invention.

### DESCRIPTION DES MODES DE REALISATION PREFERES DE L'INVENTION.

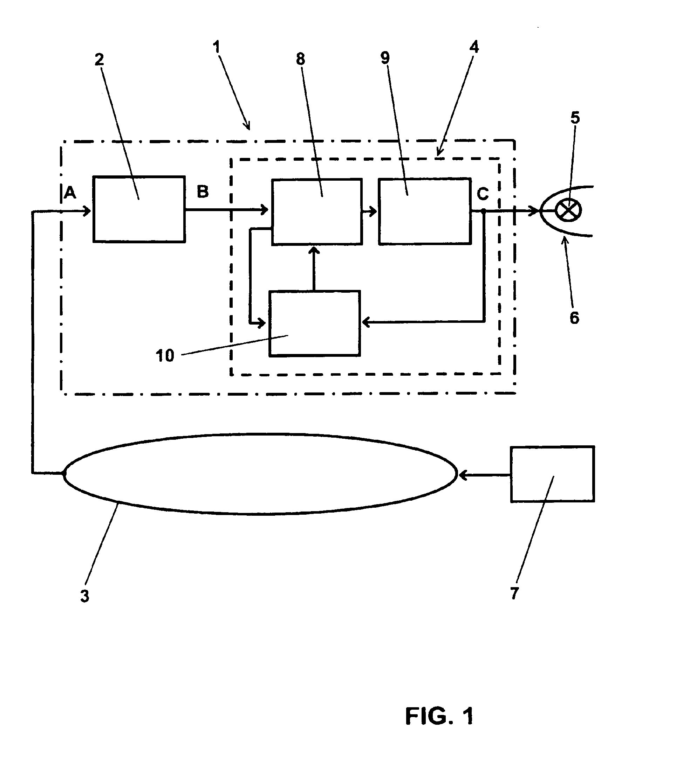

L'architecture fonctionnelle du type de ballast concerné par l'invention est représentée sur la **Figure 1**.

Le module électronique 1 se décompose essentiellement, d'une part, en un bloc de filtrage 2 faisant l'interface A, B avec le faisceau électrique 3 du véhicule, et, d'autre part, en une alimentation à découpage 4 destinée à fournir en sortie C les différentes tensions nécessaires au démarrage et au fonctionnement en régime permanent de la lampe 5 à décharge d'un projecteur 6 à partir de la source d'alimentation de bord 7.

La lampe 5 est une lampe à décharge de haute intensité au xénon qui nécessite notamment une tension de démarrage de l'ordre de 25 kV. Cette haute tension est produite à partir de la tension de 12 V de la batterie 7 par l'alimentation à découpage 4 agencée de manière habituelle, c'est à dire qu'elle comprend un convertisseur CC-CC 8 à découpage, suivi d'un convertisseur CC-CA 9. La largeur des impulsions de découpage du convertisseur CC-CC 8 est contrôlée de manière connue en soi en fonction de la charge 5 de l'alimentation 4 par un circuit de régulation 10.

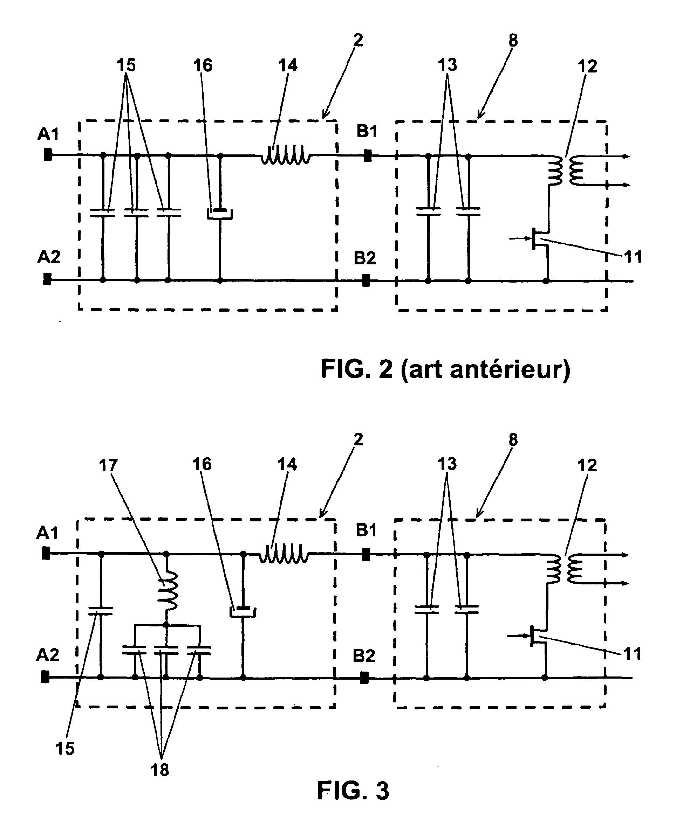

La **Figure 2** montre le schéma électrique du convertisseur CC-CC 8 mis en oeuvre dans un ballast 1 existant, et notamment l'agencement d'un transistor MOSFET de puissance 11 commutant le courant primaire d'un transformateur élévateur 12. Des condensateurs 13 connectés au primaire du transformateur 12 se chargent quand le transistor 11 est ouvert, et fournissent de l'énergie au circuit quand il est fermé.

Ce transistor 11, commandé par les impulsions de découpage, est la source des perturbations radioélectriques à la fréquence de découpage, et de ses harmoniques, se propageant vers le faisceau électrique du véhicule 3 par les fils d'alimentation B1, B2 du convertisseur 8.

Le bloc de filtrage 2 comporte une self 14 en série avec le +12 V de l'alimentation, qui constitue avec les condensateurs de réserve d'énergie 13 une cellule de filtrage classique. Des premiers condensateurs de filtrage 15, 16 sont ajoutés en avant de cette cellule, en parallèle sur les bornes d'entrée A1, A2 du bloc de filtrage 2, et constitue un filtre passe-bas.

Les moyens de filtrage 15, 16 ont typiquement une capacité totale de l'ordre de quelques centaines de µF. Ils comprennent un condensateur électrochimique 16, et plusieurs condensateurs céramiques 15 en parallèle. Cette disposition est adoptée car un condensateur électrochimique 16 possède une self série parasite importante qui doit être compensée par des condensateurs céramiques, qui ont une impédance plus faible aux fréquences élevées, mais dont la capacité est limitée à quelques µF.

Pour améliorer les performances CEM du ballast décrit ci-dessus en référence à la **Figure 2**, la solution connue consistant à augmenter la capacité totale des moyens de filtrage 15, 16 pour gagner des dBµV conduit à ajouter plusieurs condensateurs en parallèle. Une telle solution résulte en un accroissement du nombre de composants et ne peut être implantée dans un ballast dans lequel la densité des composants est déjà très élevée, sans risquer une augmentation du facteur de forme de ce ballast. Pour la même raison, il n'est pas envisageable d'intégrer dans le ballast des cellules de filtrage supplémentaire, tel que l'enseigne par exemple la note d'application de la société Texas Instruments, citée en préambule.

Les multiples essais effectués par l'entité inventive, ainsi que des simulations informatiques basées sur les modèles de type "SPICE" des composants, ont montré que l'inductance parasite des condensateurs céramiques 15 utilisés dans le ballast de la **Figure 2**, présentent une résonance propre vers 2 MHz.

Conformément à l'invention, cette inductance parasite des condensateurs céramiques 15 est mise à profit pour créer, avec une seule self additionnelle 17 de très faible valeur, un étage supplémentaire réjecteur de la fréquence de découpage.

La **Figure 3** montre le ballast selon l'invention dans lequel les moyens de filtrage 2 comportent entre les bornes d'entrée A1, A2 une self additionnelle 17 reliée en série avec trois condensateurs de découplage 18 en parallèle. Les condensateurs de découplage 18 et cette self 17 forme un circuit résonant série qui est accordé sur la fréquence de découpage du convertisseur CC-CC 8.

A la fréquence de découpage du convertisseur CC-CC 8, compte tenu de l'inductance parasite des condensateurs de découplage 18 qui est de quelques µF, l'inductance série nécessaire n'est que de l'ordre de quelques dizaines de nH.

Cette valeur d'inductance existe dans la gamme des CMS (composant monté en surface) et ce composant est donc aisément implantable sur le circuit imprimé (PCB) du ballast 1, là où un condensateur électrochimique supplémentaire n'eût pas trouvé sa place.

La faible valeur de la self 17 permet aussi, dans une variante de réalisation, de graver le bobinage directement sur la face du circuit imprimé opposée aux composant 14, 15, 16, 18, selon la technique dite de la "self imprimée".

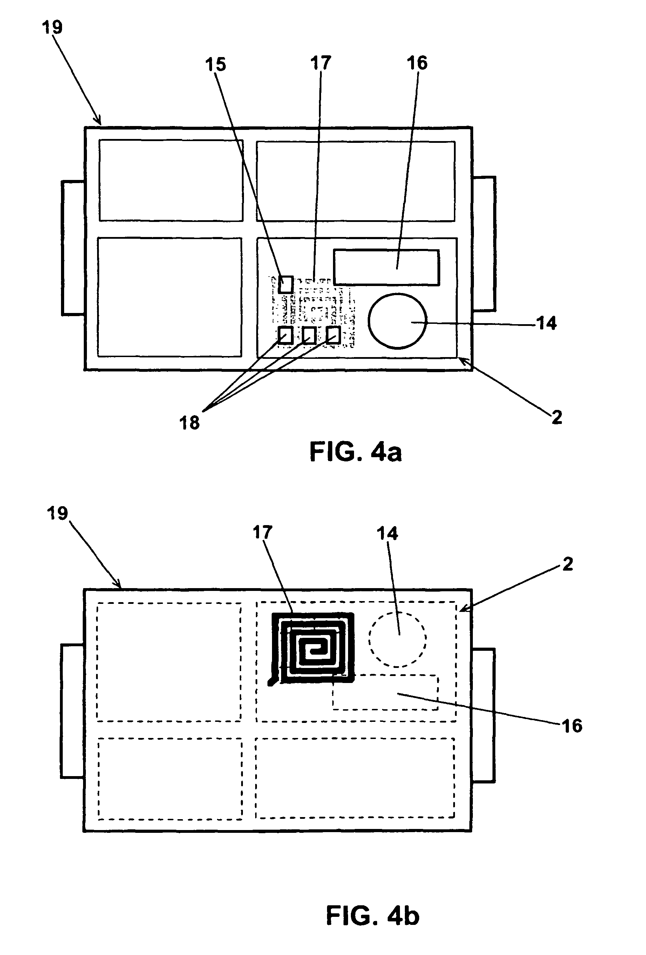

Le circuit imprimé 19 du ballast 1 selon l'invention dans la variante de réalisation ci-dessus est représenté schématiquement avec ses différents blocs fonctionnels sur les **Figures 4a et 4b**, et notamment le bloc de filtrage 2.

Sur le dessus du PCB 19 (**Figure 4a**) sont agencés une self de filtrage 14, un condensateur électrochimique de filtrage16, un condensateur céramique de filtrage 15 et les trois condensateurs céramiques de découplage 18 (type CMS).

Sur la face opposée (**Figure 4b**) du PCB, on trouve, en regard des condensateurs de découplage 18, la self additionnelle 17 formée par une piste cuivrée en spirale.

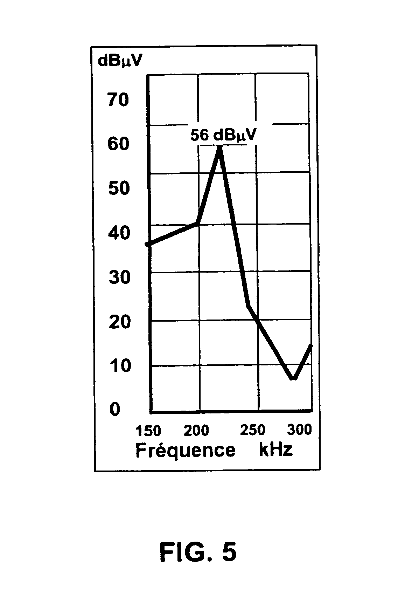

Les tests CEM effectués par l'entité inventive ont permis de vérifier que le ballast réalisé selon les principes de l'invention, et connecté au faisceau électrique d'un véhicule, satisfait pleinement à la norme CISPR-25 pour ce type d'équipement. Comme le montre la **Figure 5** présentant les résultats dans la bande de 150 kHz à 300 kHz, la valeur maximale obtenue de 56 dBµV est bien inférieure à la limite de 60 dBµV spécifiée par la norme.

Comme il va de soi l'invention ne se limite pas aux seules formes de réalisation particulières décrites ci-dessus et embrasse au contraire toutes les variantes possibles de réalisation.

En particulier, l'invention ne se limite pas à des ballasts avec une fréquence de découpage comprise dans la bande de fréquences de 150 kHz à 300 kHz. Une fréquence de découpage dans une bande de fréquences différente peut bien évidemment être choisie par l'homme du métier sans pour autant sortir du cadre de la présente invention.

De plus, le nombre et le type des condensateurs de filtrage 15, 16, ou de découplage 18, précisés dans la description, ainsi que leur agencement sur le PCB, ne sont aucunement limitatifs.

La mise en oeuvre d'une self additionnelle 17 de type "CMS", aussi bien que de type "self imprimée", n'est qu'une des possibilités qui s'offrent à l'homme de métier. Un ballast 1 où elle serait remplacée par d'autres types, adaptés à la fréquence de découpage utilisée, ne sortirait pas du cadre de la présente invention dans la mesure où l'inductance et l'agencement de cette self additionnelle 17 résultent des revendications ci-après.

## Revendications

1. Ballast (1) de lampe à décharge (5) notamment pour dispositif d'éclairage / signalisation (6) de véhicule, comprenant :
- des bornes d'entrée (A; A1, A2) recevant une tension continue provenant d'une source d'alimentation (7) dudit véhicule,
- un circuit d'alimentation à découpage (4), fonctionnant à une fréquence de découpage prédéterminée, pour fournir en sortie une tension alimentant ladite lampe à décharge (5), et
- des moyens de filtrage (2) disposés en entrée dudit ballast (1), lesdits moyens de filtrage (2) étant destinés à réduire des perturbations radioélectriques produites par ledit circuit alimentation à découpage (4) et comportant au moins un premier condensateur de filtrage (15, 16) connecté entre lesdites bornes d'entrée (A; A1, A2) et une self de filtrage (14) connectée en série entre l'une (A1) desdites bornes d'entrée et ledit circuit d'alimentation à découpage (4),
**caractérisé en ce que** lesdits moyens de filtrage (2) comprennent également au moins un second condensateur de filtrage (18) en série avec une self additionnelle (17), ledit second condensateur (18) formant avec ladite self additionnelle (17) un circuit résonant situé entre lesdites bornes d'entrée (A; A1, A2) et accordé sur ladite fréquence de découpage.

2. Ballast selon la revendication 1, **caractérisé en ce que** ledit second condensateur (18) est constitué d'une pluralité de condensateurs de découplage (18) en parallèle.

3. Ballast selon la revendication 1 ou 2, **caractérisé en ce que** ledit second condensateur (18) ou lesdits condensateurs de découplage (18) sont de type céramique.

4. Ballast selon l'une quelconque des revendications 1 à 3, **caractérisé en ce que** ladite self additionnelle (17) est de type composant monté en surface.

5. Ballast selon l'une quelconque des revendications 1 à 3, **caractérisé en ce que** ladite self additionnelle (17) est de type self imprimée et est formée directement à la surface d'un circuit imprimé (19) supportant des composants électroniques (14, 15, 16, 18) dudit ballast (1).

6. Ballast selon la revendication 5, **caractérisé en ce que** ledit second condensateur (18) ou lesdits condensateurs de découplage (18) sont du type composant monté en surface, et **en ce que** ladite self additionnelle (17) est formée sur la face dudit circuit imprimé (19) opposée à celle sur laquelle sont implantés ledit second condensateur (18) ou lesdits condensateurs de découplage (18).

7. Ballast selon l'une quelconque de revendications 1 à 6, **caractérisé en ce que** ladite fréquence est comprise entre 150 kHz et 300 kHz, la capacité dudit second condensateur (18) ou de chacun desdits condensateurs de découplage (18) est de l'ordre de quelques µF, et l'inductance de ladite self additionnelle (17) est de l'ordre de quelques dizaines de nH.

8. Ballast selon l'une quelconque des revendications 1 à 7, **caractérisé en ce que** l'inductance de ladite self additionnelle (17) est calculée en fonction de ladite fréquence en tenant compte de l'inductance parasite dudit second condensateur (18) ou de chacun desdits condensateurs de découplage (18).

9. Utilisation dans un véhicule du ballast selon l'une quelconque des revendications 1 à 8, ledit véhicule étant soumis à une contrainte réglementaire imposant un niveau de perturbations radioélectriques inférieur à 60 dBµV dans toute la bande de fréquences comprises entre 150 kHz et des fréquences supérieures.

10. Utilisation dans un véhicule du ballast selon l'une quelconque des revendications 1 à 8 pour alimenter une lampe au xénon.

## Claims

1. Ballast (1) for a discharge lamp (5), in particular for a vehicle lighting/signalling device (6), comprising:
- input terminals (A; A1, A2) which receive a direct voltage obtained from a supply source (7) of the said vehicle;
- a cut-off supply circuit (4) which functions at a predetermined cut-off frequency, in order to provide as output a voltage which supplies the said discharge lamp (5); and
- filtering means (2) which are disposed at the input of the said ballast (1), the said filtering means (2) being designed to reduce radioelectric disturbances produced by the said cut-off supply circuit (4) and comprising at least one first filtering capacitor (15, 16) which is connected between the said input terminals (A; A1, A2) and a filtering self-induction coil (14) which is connected in series between one (A1) of the said input terminals and the said cut-off supply circuit (4),
**characterised in that** the said filtering means (2) also comprise at least one second filtering capacitor (18) in series with an additional self-induction coil (17), the said second capacitor (18) forming together with the said additional self-induction coil (17) a resonant circuit which is situated between the said input terminals (A; A1, A2) and is matched with the said cut-off frequency.

2. Ballast according to claim 1, **characterised in that** the said second capacitor (18) consists of a plurality of uncoupling capacitors (18) in parallel.

3. Ballast according to claim 1 or claim 2, **characterised in that** the said second capacitor (18) or the said uncoupling capacitors (18) are of the ceramic type.

4. Ballast according to any one of claims 1 to 3, **characterised in that** the said additional self-induction coil (17) is of the surface-mounted component type.

5. Ballast according to any one of claims 1 to 3, **characterised in that** the additional self-induction coil (17) is of the printed self-induction coil type, and is formed directly on the surface of a printed circuit (19) which supports electronic components (14, 15, 16, 18) of the said ballast (1).

6. Ballast according to claim 5, **characterised in that** the said second capacitor (18) or the said uncoupling capacitors (18) are of the surface-mounted component type, and **in that** the said additional self-induction coil (17) is formed on the surface of the said printed circuit (19) opposite that on which the said second capacitor (18) or the said uncoupling capacitors (18) are implanted.

7. Ballast according to any one of claims 1 to 6, **characterised in that** the said frequency is contained between 150 kHz and 300 kHz, the capacity of the said second capacitor (18) or of each of the said uncoupling capacitors (18) is approximately a few µF, and the inductance of the said additional self-induction coil (17) is approximately a few tens of nH.

8. Ballast according to any one of claims 1 to 7, **characterised in that** the inductance of the said additional self-induction coil (17) is calculated according to the said frequency, taking into account the parasitic inductance of the said capacitor (18) or of each of the said uncoupling capacitors (18).

9. Use in a vehicle of the ballast according to any one of claims 1 to 8, the said vehicle being subject to a statutory constraint which imposes a level of radioelectric disturbances of less than 60 dBµV in the entire frequency band contained between 150 kHz and higher frequencies.

10. Use in a vehicle of the ballast according to any one of claims 1 to 8 in order to supply a xenon lamp.

## Patentansprüche

1. Vorschaltgerät (1) für eine Entladungslampe (5), insbesondere für eine Fahrzeugbeleuchtungs-/Signalgebungsvorrichtung (6), mit:
- Eingangsklemmen (A; A1, A2), die eine von einer Stromquelle (7) des Fahrzeugs ausgehende Gleichspannung erhalten,
- einer getakteten Stromversorgung (4), die bei einer vorbestimmten Taktfrequenz betrieben wird, um am Ausgang eine Spannung zu liefern, welche die Entladungslampe (5) speist, und
- Glättungsmitteln (2), die am Eingang des Vorschaltgeräts (1) angeordnet sind, wobei die Glättungsmittel (2) zum Verringern der von der getakteten Stromversorgung (4) erzeugten radioelektrischen Störungen bestimmt sind, und wenigstens einen ersten Glättungskondensator (15, 16) aufweisen, der zwischen die Eingangsklemmen (A; A1, A2) und eine Glättungsdrossel (14) geschaltet ist, die zwischen der einen (A1) Eingangsklemme und der getakteten Stromversorgung (4) in Reihe geschaltet ist,
**dadurch gekennzeichnet, dass** die Glättungsmittel (2) ferner auch wenigstens einen zweiten Glättungskondensator (18) in Reihe mit einer zusätzlichen Drossel (17) umfassen, wobei der zweite Kondensator (18) mit der zusätzlichen Drossel (17) einen Resonanzkreis bildet, der zwischen den Eingangsklemmen (A; A1, A2) liegt und auf die Taktfrequenz abgestimmt ist.

2. Vorschaltgerät nach Anspruch 1,
**dadurch gekennzeichnet, dass** der zweite Kondensator (18) durch eine Vielzahl parallel geschalteter Entkopplungskondensatoren (18) gebildet ist.

3. Vorschaltgerät nach Anspruch 1 oder 2,
**dadurch gekennzeichnet, dass** der zweite Kondensator (18) oder die Entkopplungskondensatoren (18) vom keramischen Typ sind.

4. Vorschaltgerät nach einem der Ansprüche 1 bis 3,
**dadurch gekennzeichnet, dass** die zusätzliche Drossel (17) vom SMD-Typ ist.

5. Vorschaltgerät nach einem der Ansprüche 1 bis 3,
**dadurch gekennzeichnet, dass** die zusätzliche Drossel (17) vom Typ einer gedruckten Drosselspule ist und unmittelbar auf der Oberfläche einer gedruckten Schaltung (19) ausgebildet ist, die elektronische Bauteile (14, 15, 16, 18) des Vorschaltgeräts (1) trägt.

6. Vorschaltgerät nach Anspruch 5,
**dadurch gekennzeichnet, dass** der zweite Kondensator (18) oder die Entkopplungskondensatoren (18) vom SMD-Typ sind, und dass die zusätzliche Drossel (17) auf der Seite der gedruckten Schaltung (19) ausgebildet ist, die derjenigen entgegengesetzt ist, auf welcher der zweite Kondensator (18) oder die Entkopplungskondensatoren (18) montiert sind.

7. Vorschaltgerät nach einem der Ansprüche 1 bis 6,
**dadurch gekennzeichnet, dass** die Frequenz zwischen 150 kHz und 300 kHz liegt, wobei die Kapazität des zweiten Kondensators (18) oder eines jeden Entkopplungskondensators (18) bei etwa einigen µF und die Induktivität der zusätzlichen Drossel (17) bei etwa einigen Dutzend nH liegt.

8. Vorschaltgerät nach einem der Ansprüche 1 bis 7,
**dadurch gekennzeichnet, dass** die Induktivität der zusätzlichen Drossel (17) in Abhängigkeit der genannten Frequenz unter Berücksichtigung der Störinduktivität des zweiten Kondensators (18) oder eines jeden Entkopplungskondensators (18) berechnet ist.

9. Verwendung des Vorschaltgeräts nach einem der Ansprüche 1 bis 8 in einem Fahrzeug, wobei das Fahrzeug einer vorschriftsmäßigen Belastung unterzogen wurde, die einen radioelektrischen Störpegel kleiner als 60 dBµV im gesamten Frequenzbereich zwischen 150 kHz und höheren Frequenzen aufbringt.

10. Verwendung des Vorschaltgeräts nach einem der Ansprüche 1 bis 8 in einem Fahrzeug zur Versorgung einer Xenon-Lampe.
